# EUROPÄISCHE PATENTSCHRIFT

(11) **EP 2 531 559 B1**
(45) Veröffentlichungstag und Bekanntmachung des Hinweises auf die Patenterteilung: **12.11.2014**
(21) Anmeldenummer: 11701253.4
(22) Anmeldetag: 25.01.2011
(51) Int. Cl.: C08L 71/00

(54) **HÄRTBARE ZUSAMMENSETZUNGEN MIT VERBESSERTEN BRANDEIGENSCHAFTEN**
CURABLE COMPOSITIONS HAVING IMPROVED FIRE PROPERTIES
COMPOSITIONS DURCISSABLES PRÉSENTANT UN COMPORTEMENT AU FEU AMÉLIORÉ

(30) Priorität: 04.02.2010 DE 102010001588
(43) Veröffentlichungstag der Anmeldung: 12.12.2012
(73) Patentinhaber: Henkel AG & Co. KGaA, 40589 Düsseldorf (DE)
(72) Erfinder: KOHL, Matthias, 69469 Weinheim (DE); BOLTE, Andreas, 42653 Solingen (DE); SPIELKAMP, Nick, 45259 Essen (DE); PRÖBSTER, Manfred, 69226 Nußloch (DE); YILMAZOGLU, Deniz, 69201 Sandhausen (DE)
(86) Internationale Anmeldenummer: PCT/EP2011/050942
(87) Internationale Veröffentlichungsnummer: WO 2011/095408

(56) Entgegenhaltungen:
- EP-A1- 1 000 979
- EP-A1- 1 342 742
- EP-A1- 1 526 153
- EP-A1- 1 894 975
- EP-A2- 1 041 101
- US-A- 5 399 607

## Beschreibung

Die Erfindung betrifft härtbare Zusammensetzungen mit verbesserten Brandeigenschaften, basierend auf einer Mischung aus Silan-modifizierten Polyethern oder Polyacrylsäureestern und mindestens einem speziellen Poly(dialkylsiloxan). Die Erfindung betrifft ferner die Verwendung derartiger Zusammensetzungen als Kleb-, Dicht- oder Beschichtungsstoff, insbesondere zur Ausrüstung eines Substrats mit einer flammhemmenden, elastischen Beschichtung, eine dabei erhältliche Beschichtung, sowie die Verwendung der speziellen Poly(dialkylsiloxane) zur Verbesserung des Brandverhaltens einer härtbaren Zusammensetzung auf Basis der genannten Silan-modifizierten Polyether oder Polyacrylsäureester.

Ein- und zweikomponentige, feuchtigkeitshärtende Kleb-, Dicht- und Beschichtungsstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Poly(dimethylsiloxanen) sind in letzter Zeit auch verstärkt die so genannten silanmodifizierten Kleb- und Dichtstoffe eingesetzt worden. Gegenüber den Polyurethan-Kleb- und Dichtstoffen weisen die silanmodifizierten Kleb- und Dichtstoffe den Vorteil auf, dass sie frei von Isocyanatgruppen, insbesondere von monomeren Diisocyanaten, sind. Ferner zeichnen sie sich durch ein breites Haftspektrum auf einer Vielzahl von Substraten ohne Oberflächenvorbehandlung durch Primer aus. Auch gegenüber traditionellen Silikon- Kleb- und Dichtstoffen auf der Basis von Dimethylpolysiloxanen weisen die silanmodifizierten Kleb- und Dichtstoffe auf einer Vielzahl von Substraten deutlich besseres Haftungsverhalten auf. Zudem lassen sich die traditionellen Silikon- Kleb- und Dichtstoffe im Gegensatz zu silanmodifizierten Kleb- und Dichtstoffen nicht überstreichen und schmutzen leichter an. Silanmodifizierte Kleb-, Dicht- und Beschichtungsstoffe sind daher in vielen Anwendungsfällen die Systeme der Wahl.

Dabei sind die Anforderungen an Kleb-, Dicht- und Beschichtungsstoffe vielfältig und je nach Einsatzzweck unterschiedlich. Natürlich müssen die Kleb-, Dicht- und Beschichtungsstoffe zunächst einmal ihren primären Zweck erfüllen, d.h. zuverlässig kleben, dichten, beziehungsweise gut haftende und beständige Beschichtungen ausbilden. Es spielen aber auch andere Faktoren, wie die Überstreichbarkeit, Langzeitstabilität oder das Verhalten bei thermischer Belastung, etwa im Falle eines Brandes, eine große Rolle. Letzteres ist insbesondere dann von entscheidender Bedeutung, wenn die Kleb-, Dicht- und Beschichtungsstoffe im Gebäudebau, Fahrzeugbau oder Anlagenbau eingesetzt werden sollen, insbesondere wenn die Anlagen der Verarbeitung oder dem Transport leichtentzündlicher oder gar explosiver Stoffe dienen, wie dies beispielsweise in der chemischen oder erdölverarbeitenden Industrie oft der Fall ist.

Für solche Applikationen wurden bereits verschiedene Kleb-, Dicht- und Beschichtungsstoffe auf Basis silanmodifizierter Polymere entwickelt und erfolgreich eingesetzt. Diese finden beispielsweise Verwendung zum elastischen Beschichten und Kleben von Rohr- und Kesselanlagen und zum Beschichten von Isoliermaterialien, die ihrerseits beim Bau entsprechender Anlagen zum Einsatz kommen. Die Produkte basieren in der Regel auf Silanmodifizierten Polyethern oder Polyacrylsäureestern. Zur Erzielung von Flammschutzeigenschaften werden große Mengen an flammhemmenden Zusätzen beigemischt. Aufgrund ständig steigender Anforderungen an die Brandbeständigkeit der in bestimmten Bereichen eingesetzten Materialien, ist es jedoch erforderlich, das Brandverhalten der Kleb-, Dicht- und Beschichtungsstoffe noch weiter zu verbessern.

Für den Einsatz im Gebäudebau schlägt EP 0 839 853 A1 versprühbare Silikonemulsionen vor, die auf einem Umsetzungsprodukt klassischer Silikone mit einem Aminoxy-funktionellen Siloxan oder Silan beruhen. Die Emulsion enthält zudem Wasser, Tensid und einen speziellen Füllstoff. Da es sich hierbei um ein System auf der Basis von Dimethylpolysiloxanen handelt, weist dieses die bereits oben erwähnten Nachteile der Silikon-Kleb- und -Dichtstoffe auf. Insbesondere ist die Haftung auf einer Reihe von Materialien nicht zufrieden stellend.

Aus US 2004/0204539 A1 sind schnellhärtende einkomponentige Mischungen bekannt, die Alkoxysilan-terminierte Polymere enthalten. Als Polymere kommen dabei solche mit einem organischen Rückgrat in Frage, aber auch solche, dessen Polymerrückgrat ganz oder zumindest teilweise von einem Organosiloxan gebildet wird. Es wird allgemein darauf hingewiesen, dass Mischungen von Polymeren mit unterschiedlichen Hauptketten eingesetzt werden können, eine konkrete Offenbarung einer Mischung, die ein Polymer mit organischem Rückgrat und ein Polymer auf Organosiloxan-Basis enthält, findet sich jedoch nicht. Die beschriebenen Mischungen sollen schnell aushärten, das Brandverhalten wird nicht thematisiert. Dementsprechend wird die Zugabe eines flammhemmenden Zusatzes auch nur am Rande bei der Aufzählung einer Vielzahl möglicher weiter Hilfsstoffe erwähnt.

Gegenstand der WO 2007/048538 A1 sind α-Ethoxysilan modifizierte Polymere, bei deren Härtung weniger Methanol freigesetzt wird und die eine akzeptable Aushärtungsgeschwindigkeit aufweisen. Als mögliche Polymerbasis sind neben einer Vielzahl von unterschiedlichsten organischen Polymeren auch Silikonharze genannt. Auch hier wird keine Mischung von Polymeren offenbart, wobei ein Polymer ein organisches Rückgrat aufweist und ein zweites Polymer auf Organosiloxan basiert. Wiederum wird das Brandverhalten nicht thematisiert. Nur im Rahmen einer Aufzählung optionaler Zusatzstoffe wird die Zugabe verschiedener Flammschutzmittel genannt.

Aufgabe der Erfindung war es daher, eine vernetzbare Zusammensetzung zur Verfügung zu stellen, welche die Grundlage für einen Kleb-, Dicht- und Beschichtungsstoff auf Basis eines Silan-modifizierten organischen Polymers bildet, der sowohl ein-, als auch zwei- oder mehrkomponentig formuliert werden kann, und der gute Brandbeständigkeit zeigt.

Die Vorzüge bekannter Kleb-, Dicht- und Beschichtungsstoffe auf Basis silanmodifizierter Polymere, wie gute Verstreichbarkeit und gutes Applikationsverhalten, gute Haftung auf vielen Untergründen, sowie hohe Elastizität, hohe Festigkeit, gute Abriebfestigkeit und Witterungsbeständigkeit der ausgehärteten Zubereitungen, sollen dabei selbstverständlich erhalten bleiben. Zudem soll nach Möglichkeit auf den Einsatz von Halogen- oder Antimon-haltigen Substanzen verzichtet werden können.

Überraschenderweise wurde gefunden, dass die Aufgabe durch Einsatz spezieller Poly(dialkylsiloxane) in härtbaren Zusammensetzungen auf Basis bestimmter Silan-modifizierter Polyether oder Polyacrylsäureester gelöst wird.

Gegenstand der Erfindung ist daher eine härtbare Zusammensetzung, umfassend
a) mindestens ein organisches Polymer, ausgewählt aus Polyethern und Polyacrylsäureestern, wobei das organische Polymer mindestens eine Endgruppe der allgemeinen Formel (I)

   -Aₙ-R-SiXYZ (I)

   aufweist, worin
   A für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht,
   R ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
   X, Y, Z unabhängig voneinander C₁ - C₈ - Alkyl-, C₁ - C₈ - Alkoxy- oder C₁ - C₈ - Acyloxyreste sind, wobei mindestens einer der Reste eine C₁ - C₈ - Alkoxy- oder C₁ - C₈ - Acyloxygruppe ist, und
   n 0 oder 1 ist,
b) mindestens ein Poly(dialkylsiloxan) mit mindestens einer Endgruppe der allgemeinen Formel (I')

   -A'_{n'}-R'-SiX'Y'Z' (I'),

   worin
   A' für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht,
   R' eine direkte Bindung oder ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
   X', Y', Z' unabhängig voneinander Vinylreste, C₁ - C₈ - Alkoxy- oder C₁ - C₈ - Acyloxyreste sind, wobei mindestens einer der Reste eine Vinylgruppe und mindestens einer der Reste eine C₁ - C₈ - Alkoxy- oder C₁ - C₈ - Acyloxygruppe ist, und
   n' 0 oder 1 ist, und
   c) mindestens einen flammhemmenden Zusatz, ausgewählt aus rotem Phosphor, organischen Phosphorverbindungen, Ammoniumpolyphosphat, Metallhydroxiden, blähfähigem Graphit, Zinkborat und Melaminsalzen.

Eine derartige Zusammensetzung zeigt hervorragende Hafteigenschaften auf verschiedensten Substraten, ermöglicht durch die sehr gute Dehnbarkeit nach der Aushärtung hochelastische Verklebungen und Beschichtungen und zeichnet sich insbesondere durch ein ausgezeichnetes Brandverhalten aus.

Unter einem ausgezeichneten Brandverhalten ist dabei zu verstehen, dass die härtbaren Zusammensetzungen und die daraus erhältlichen ausgehärteten Produkte schwer entflammbar sind und selbstverlöschende Eigenschaften aufweisen. Insbesondere ist darunter zu verstehen, dass sich die härtbaren Zusammensetzungen und die daraus erhältlichen ausgehärteten Produkte erst bei höheren Temperaturen und/oder längerer Beflammung entzünden und/oder nach Beflammung bis zur Entzündung und anschließender Entfernung der Flamme schneller selbständig verlöschen als eine härtbare Zusammensetzung, die sich von einer erfindungsgemäßen Zusammensetzung durch Ersatz des Poly(dialkylsiloxan) b) durch weiteres organisches Polymer a) unterscheidet.

Neben der bemerkenswerten Verbesserung des Brandverhaltens überrascht auch, dass die ungehärteten Mischungen bei der Lagerung keinerlei Stabilitätsprobleme zeigen. Ist es doch bekannt, dass viele klassische Silikonpolymere nicht mit Silan-modifizierten Polymeren verträglich sind, und Mischungen dieser Komponenten häufig Separation / Entmischung in der Kartusche oder anderen Aufbewahrungsgefäßen zeigen. Auch die Mischbarkeit mit Beschleunigerpasten, wie sie bei zweikomponentig formulierten Kleb-, Dicht- und Beschichtungsstoffen auf Basis Silan-modifizierter Polymere eingesetzt werden, ist einwandfrei.

Unter einer härtbaren Zusammensetzung wird ein Stoff oder eine Mischung aus mehreren Stoffen verstanden, der beziehungsweise die durch physikalische oder chemische Maßnahmen härtbar ist. Dabei können diese chemischen oder physikalischen Maßnahmen beispielsweise in der Zuführung von Energie in Form von Wärme, Licht oder sonstiger elektromagnetischer Strahlung, aber auch in einfachstes in Kontakt Bringen mit Luftfeuchtigkeit, Wasser oder einer reaktiven Komponente bestehen.

Unter einem Polyether wird ein Polymer verstanden, dessen organische Wiederholungseinheiten Ether-Funktionalitäten C-O-C in der Hauptkette enthalten. Nicht zu den Polyethern werden damit Polymere mit seitenständigen Ether-Gruppen gerechnet, wie zum Beispiel die Celluloseether, Stärkeether und Vinylether-Polymere. Auch Polyacetale wie das Polyoxymethylen (POM) werden im Allgemeinen nicht zu den Polyethern gezählt.

Unter einem Polyacrylsäureester wird ein Polymer auf der Basis von Acrylsäureestern und/oder Methacrylsäureestern verstanden, das daher als Wiederholungseinheit das Strukturmotiv -CH₂-CR¹(COOR²)- aufweist, worin R¹ für H oder Methyl und R² für lineare, verzweigte, cyclische und/oder auch funktionelle Substituenten enthaltende Alkylreste steht. Vorzugsweise steht R¹ für H. R² steht vorzugsweise für gegebenenfalls substituiertes C₁ - C₁₀ - Alkyl, besonders bevorzugt für für gegebenenfalls substituiertes C₁ - C₄ - Alkyl und ganz besonders bevorzugt für Methyl, Ethyl, Isopropyl, n-Butyl, Isobutyl, tert.-Butyl, Cyclohexyl, 2-Ethylhexyl oder 2-Hydroxyethyl.

Die erfindungsgemäße härtbare Zusammensetzung enthält mindestens ein organisches Polymer, ausgewählt aus Polyethern und Polyacrylsäureestern, wobei das organische Polymer mindestens eine Endgruppe der allgemeinen Formel (I)

-Aₙ-R-SiXYZ (I)

aufweist, wobei A, R, X, Y, Z und n die oben genannten Bedeutungen haben. Im folgenden werden diese organischen Polymere auch als Komponente a) oder organisches Polymer a) bezeichnet.

Dabei versteht man unter einer zweibindigen oder bivalenten Verknüpfungseinheit A eine zweibindige chemische Gruppe, die das Polymergerüst mit dem Rest R der Endgruppe verknüpft. Die zweibindige Verknüpfungseinheit A kann beispielsweise bei der Herstellung des alkoxy- und/oder acyloxysilanterminierten Polyether- und/oder Polyacrylsäureesterpolymers ausgebildet werden, zum Beispiel als Urethangruppe (Carbamatgruppe) durch die Reaktion eines mit Hydroxygruppen funktionalisierten Polyethers mit einem Isocyanatosilan. Dabei kann die bivalente Verknüpfungseinheit von im zugrunde liegenden Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist.

n ist 0 oder 1, d.h. die zweibindige Verknüpfungseinheit A verknüpft das Polymergrundgerüst mit dem Rest R (n = 1) oder das Polymergerüst ist direkt mit dem Rest R verbunden bzw. verknüpft (n = 0).

Der Rest R ist ein zweibindiger, gegebenenfalls in der Kohlenwasserstoffhauptkette ein Heteroatom enthaltender Kohlenwasserstoffrest mit 1 bis 12 Kohlenstoffatomen. Als Heteroatom kann beispielsweise Sauerstoff (O) oder Stickstoff (N) enthalten sein. Bei dem Kohlenwasserstoffrest kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein.

X, Y und Z sind unabhängig voneinander C₁ - C₈ - Alkylreste, C₁ - C₈ - Alkoxyreste oder C₁ - C₈ - Acyloxyreste. Dabei muss mindestens einer der Reste X, Y, Z eine hydrolysierbare Gruppe, das heißt ein C₁ - C₈ - Alkoxyrest oder ein C₁ - C₈ - Acyloxyrest sein. Als hydrolysierbare Gruppen werden vorzugsweise Alkoxygruppen, insbesondere Methoxy-, Ethoxy-, Propyloxy- und Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Bevorzugt ist einer der Reste X, Y und Z eine Alkylgruppe und die verbleibenden beiden Reste stehen jeweils für eine Alkoxygruppe, oder alle drei Reste X, Y und Z stehen jeweils für eine Alkoxygruppe. Generell verfügen Polymere, die Di- bzw. Trialkoxysilylgruppen enthalten, über hoch reaktive Verknüpfungsstellen, die ein schnelles Aushärten, hohe Vernetzungsgrade und damit gute Endfestigkeiten ermöglichen. Der besondere Vorteil von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll. Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die gegebenenfalls benötigte Menge an Katalysator, und sie weisen Vorteile beim "kalten Fluss" - der Formstabilität eines entsprechenden Klebstoffs unter dem Einfluss von Kraft- und gegebenenfalls Temperatureinwirkung - auf.

Besonders bevorzugt sind X, Y und Z jeweils unabhängig voneinander eine Methyl-, eine Ethyl-, eine Methoxy- oder eine Ethoxygruppe. Besonders bevorzugt sind X, Y und Z jeweils unabhängig voneinander eine Methyl- oder eine Methoxygruppe. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen. Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden. Interessante Gestaltungsmöglichkeiten eröffnen auch Kombinationen beider Gruppen. Wird zum Beispiel für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn über die Ausgestaltung der Alkoxygruppen eine verzögerte Aushärtung erreicht werden soll.

Vorzugsweise enthalten die erfindungsgemäßen härtbaren Zusammensetzungen jedoch mindestens ein organisches Polymer a) mit mindestens einer Endgruppe der allgemeinen Formel (I), wobei X, Y und Z jeweils unabhängig voneinander für Methyl, Ethyl, Methoxy oder Ethoxy stehen, mit der Maßgabe, dass mindestens zwei der Reste X, Y und Z für Methoxy oder Ethoxy stehen. Besonders bevorzugt ist ein organisches Polymer a) mit mindestens einer Endgruppe der allgemeinen Formel (I), wobei X, Y und Z für Methoxy stehen.

R ist bevorzugt ein Kohlenwasserstoffrest mit 1 bis 6 C-Atomen. Auch über die Länge der Kohlenwasserstoffreste, die das Bindeglied zwischen Polymergerüst und Silylrest bilden, kann die Aushärtungsgeschwindigkeit der Zusammensetzung beeinflusst werden. Insbesondere ist R ein Methylen-, Ethylen- oder 1,3-Propylenrest. Besonders bevorzugt werden Methylen- und 1,3-Propylenreste eingesetzt. Alkoxysilan-terminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt.
Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf. Durch ein bewusstes Kombinieren von α- und γ-Alkoxysilan-terminierten Bausteinen kann somit die Aushärtungsgeschwindigkeit der Systeme wunschgemäß beeinflusst werden.

Vorzugsweise enthalten die erfindungsgemäßen härtbaren Zusammensetzungen daher mindestens ein organisches Polymer a) mit mindestens einer Endgruppe der allgemeinen Formel (I), wobei R für einen Methylen- oder 1,3-Propylenrest steht.

A ist erfindungsgemäß eine Amid-, Carbamat-, Harnstoff-, Imino-, Carboxylat-, Carbamoyl-, Amidino-, Carbonat-, Sulfonat- oder Sulfinatgruppe oder ein Sauerstoff- oder Stickstoffatom. Die Verknüpfungseinheit A kann bei der Herstellung der silylterminierten Polymere ausgebildet werden, indem das Gerüstpolymer mit einer reaktiven Verbindung, die die -R-SiXYZ-Sequenz trägt, umgesetzt wird. Die Gruppe A kann von im zugrunde gelegten Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist. In diesem Fall entspräche n dem Wert 0. Ist die Verknüpfungseinheit A von den Verknüpfungsgruppen im Polymergerüst unterscheidbar, entspricht n dem Wert 1.

Besonders bevorzugt als Verknüpfungseinheit sind Carbamat- (Urethan-) und Harnstoffgruppen, die durch Umsetzung bestimmter funktioneller Gruppen eines Prepolymers mit einem Organosilan, welches eine weitere funktionelle Gruppe trägt, erhalten werden können. Carbamatgruppen können z. B. entstehen, wenn entweder das Polymergerüst terminale Hydroxygruppen enthält und als weitere Komponente Isocyanatosilane eingesetzt werden, oder wenn umgekehrt ein Polymer, welches endständige Isocyanatgruppen aufweist, mit einem terminale Hydroxygruppen enthaltenden Alkoxysilan umgesetzt wird. Auf ähnliche Weise können Harnstoffgruppen erhalten werden, wenn eine terminale primäre oder sekundäre Aminogruppe - entweder am Silan oder am Polyether und/oder Polyacrylsäureester - eingesetzt wird, die mit einer im jeweiligen Reaktionspartner vorhandenen terminalen Isocyanatgruppe reagiert. Das bedeutet, dass entweder ein Aminosilan mit einem terminale Isocyanatgruppen aufweisenden Polyether und/oder Polyacrylsäureester oder ein terminal mit einer Aminogruppe substituierter Polyether und/oder Polyacrylsäureester mit einem Isocyanatosilan zur Reaktion gebracht wird.
Carbamat- und Harnstoffgruppen erhöhen vorteilhaft die Festigkeit der Polymerketten und des gesamten vernetzten Polymers, weil sie Wasserstoffbrücken ausbilden können.

Polymere, die Polyether als Grundgerüst enthalten, weisen nicht nur an den Endgruppen, sondern auch im Polymerrückgrat eine flexible und elastische Struktur auf. Damit lassen sich Zusammensetzungen herstellen, die ausgezeichnete elastische Eigenschaften aufweisen. Dabei sind Polyether nicht nur in ihrem Grundgerüst flexibel, sondern gleichzeitig beständig. So werden sie beispielsweise von Wasser und Bakterien nicht angegriffen oder zersetzt. Im Rahmen der vorliegenden Erfindung werden unter Verfügbarkeitsaspekten besonders bevorzugt Polyether auf der Basis von Polyethylenoxid und/oder Polypropylenoxid in der Komponente a) eingesetzt.

Polymere, die Polyacrylsäureester als Grundgerüst enthalten, wirken sich im Rahmen ihrer Verwendung in erfindungsgemäßen Zusammensetzungen besonders vorteilhaft auf das Brandverhalten der Zusammensetzungen aus. Bevorzugt sind entsprechende Polyacrylsäure-C₁ - C₄ - alkylester, besonders bevorzugt Polyacrylsäureester, die durch Polymerisation von Acrylsäuremethylester und Acrylsäurebutylester erhältlich sind.

Vorzugsweise kommen in erfindungsgemäßen härtbaren Zusammensetzungen daher als organisches Polymer a) Polyether, ausgewählt aus Polyethylenglykolen, Polypropylenglykolen und Ethylenglykol-Propylenglykol-Copolymeren oder Polyacrylsäure - C₁ - C₄ - alkylester zum Einsatz. Besonders bevorzugt enthält die erfindungsgemäße härtbare Zusammensetzung als organisches Polymer a) ein Polypropylenglykol mit mindestens einer Endgruppe der allgemeinen Formel (I).

Das/die organische(n) Polymer(e) a) weist/weisen bevorzugt mindestens zwei Endgruppen der allgemeinen Formel (I) auf. Jede Polymerkette enthält damit mindestens zwei Verknüpfungsstellen, an denen sich unter Abspaltung der hydrolysierten Reste in Gegenwart von Luftfeuchtigkeit die Kondensation der Polymere vollziehen kann. Auf diese Weise wird eine regelmäßige und schnelle Vernetzbarkeit erreicht, so dass Verklebungen mit guten Festigkeiten erhalten werden können. Darüber hinaus lässt sich über die Menge und den Aufbau der hydrolysierbaren Gruppen - z. B. Verwendung von Di- oder Trialkoxysilylgruppen, Methoxygruppen oder längeren Resten usw. - die Ausgestaltung des erzielbaren Netzwerks als langkettiges System (Thermoplaste), relativ weitmaschiges dreidimensionales Netzwerk (Elastomere) oder hoch vernetztes System (Duroplaste) steuern, so dass damit unter anderem die Elastizität, die Flexibilität und die Hitzebeständigkeit der fertig vernetzten Zusammensetzungen beeinflusst werden können.

Bevorzugt enthält die Komponente a) mindestens einen alkoxy- und/oder acyloxysilanterminierten Polyether, der ein Molekulargewicht Mₙ von 4.000 bis 100.000 g/mol, vorzugsweise 8.000 bis 50.000 g/mol, besonders bevorzugt 10.000 bis 30.000 g/mol, insbesondere 15.000 bis 25.000 g/mol aufweist. Unter dem Molekulargewicht Mₙ wird das zahlenmittlere Molekulargewicht des Polymeren verstanden. Im Sinne der vorliegenden Erfindung wird das zahlenmittlere Molekulargewicht Mₙ ebenso wie das gewichtsmittlere Molekulargewicht M_{w} durch Gelpermeationschromatographie (GPC) bestimmt. Ein solches Verfahren ist dem Fachmann bekannt. Die angegebenen Molekulargewichte sind besonders vorteilhaft, da die entsprechenden Zusammensetzungen ein ausgewogenes Verhältnis von Viskosität (leichte Verarbeitbarkeit), Festigkeit und Elastizität aufweisen. Sehr vorteilhaft ist diese Kombination in einem Molekulargewichtsbereich (Mₙ) von 12.000 bis 20.000 g/mol, insbesondere von 14.000 bis 18.000 g/mol, ausgeprägt.

Vorzugsweise ist im Rahmen der vorliegenden Erfindung in der Komponente a) mindestens ein Polyether enthalten, bei dem das Verhältnis M_{w}/Mₙ kleiner als 1,5 ist. Das Verhältnis M_{w}/Mₙ, das auch als Polydispersität bezeichnet wird, gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Die im Rahmen der vorliegenden Erfindung bevorzugte Polydispersität von kleiner als 1,5 deutet auf eine vergleichsweise enge Molekulargewichtsverteilung und damit auf die spezifische Ausprägung mit dem Molekulargewicht zusammenhängender Eigenschaften, wie z. B. der Viskosität, hin.

Der/die in der Komponente a) bevorzugt eingesetzten Polyether zeichnen sich ferner bevorzugt durch eine niedrige Anzahl von Doppelbindungen an den Enden der Polymerkette aus. Diese so genannte terminale Ungesättigtheit resultiert aus einer unerwünschten Nebenreaktion bei der Polymerisation niedermolekularer Diole mit Alkylenoxiden. Im Ergebnis liegt ein bestimmter Anteil an Mono-Hydroxypolyethern vor, die nur an einem Kettenende silyliert werden können und dementsprechend auch nur über ein Kettenende vernetzen. Dies hat nachteilige Auswirkungen auf die Funktionalität der Polyether und der daraus hergestellten Zusammensetzungen. Polyether mit niedriger Anzahl terminaler Doppelbindungen sind beispielsweise durch die so genannte Double-Metal-Cyanide-Katalyse (DMC-Katalyse) herstellbar.

Weiterhin enthalten die erfindungsgemäßen härtbaren Zusammensetzungen mindestens ein Poly(dialkylsiloxan) mit mindestens einer Endgruppe der allgemeinen Formel (I')

-A'ₙ-R'-SiX'Y'Z' (I'),

worin A', R', X', Y', Z' und n' oben genannte Bedeutungen besitzen. Im Folgenden werden diese Poly(dialkylsiloxan)e auch als Komponente b) oder Poly(dialkylsiloxan) b) bezeichnet.

Bezüglich der zweibindigen Verknüpfungseinheit A' gelten die oben hinsichtlich der zweibindigen Verknüpfungseinheit A gemachten Ausführungen analog. Neben den oben als besonders bevorzugte Verknüpfungseinheiten genannten Carbamat- und Harnstoffgruppen sind als Verknüpfungseinheit A' jedoch weiterhin Sauerstoffatome besonders bevorzugt. Ganz besonders bevorzugt steht die Verknüpfungseinheit A' in Formel I' für ein Sauerstoffatom.

R' steht für eine direkte Bindung oder einen zweibindigen gegebenenfalls in der Kohlenwasserstoffhauptkette ein Heteroatom enthaltenden Kohlenwasserstoffrest mit 1 bis 12 C-Atomen. Als Heteroatom kann beispielsweise Sauerstoff (O), Stickstoff (N) oder Schwefel (S) enthalten sein. Bei dem Kohlenwasserstoffrest kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein. R' steht vorzugsweise für eine direkte Bindung oder einen Kohlenwasserstoffrest mit 1 bis 6 C-Atomen. Insbesondere ist R' eine direkte Bindung, ein Methylen-, Ethylen- oder 1,3-Propylenrest. Besonders bevorzugt steht R' für eine direkte Bindung, einen Methylen- oder einen 1,3-Propylenrest, ganz besonders bevorzugt für eine direkte Bindung.

Als Komponente b) sind also Poly(dialkylsiloxane) mit mindestens einer Endgruppe der allgemeinen Formel (I'), wobei A' für -O- und R' für eine direkte Bindung stehen, bevorzugt.

X', Y', Z' stehen in Formel (I') unabhängig voneinander für Vinylreste, C₁ - C₈ - Alkoxy- oder C₁ - C₈ - Acyloxyreste, wobei mindestens einer der Reste eine Vinylgruppe und mindestens einer der Reste eine C₁ - C₈ - Alkoxy- oder C₁ - C₈ - Acyloxygruppe ist.

Insbesondere durch dieses Substitutionsmuster wird gewährleistet, dass das Poly(dialkyl-siloxan) b) mit dem organischen Polymer a) kompatibel ist und bei der Lagerung einer Zusammensetzung, enthaltend beide Polymere keinerlei Stabilitätsprobleme auftreten.

Bevorzugt steht einer der Reste X', Y' und Z' für einen Vinylrest und die verbleibenden beiden Reste stehen jeweils für eine C₁ - C₈ - Alkoxygruppe.

Bevorzugte C₁ - C₈ - Alkoxygruppen sind dabei die Methoxy- und Ethoxygruppe, besonders bevorzugt die Methoxygruppe.

Bevorzugte Komponenten b) sind demnach Poly(dialkylsiloxane) mit mindestens einer Endgruppe der allgemeinen Formel (I'), wobei X' für Vinyl und Y' und Z' unabhängig voneinander für Methoxy oder Ethoxy stehen.

Besonders bevorzugt enthalten die erfindungsgemäßen härtbaren Zusammensetzungen mindestens ein Poly(dialkylsiloxan) b) mit mindestens einer Endgruppe der allgemeinen Formel (I'), wobei A' für -O-, R' für eine direkte Bindung, n' für 1, X' für Vinyl und Y' und Z' unabhängig voneinander für Methoxy oder Ethoxy, insbesondere Methoxy, stehen.

Bei den Alkylgruppen des polymeren Grundgerüsts der Poly(dialkylsiloxane) b) kann es sich beispielsweise um ein geradkettiges oder verzweigtes oder cyclisches C₁ - C₂₀ - Alkyl handeln. Bevorzugte Alkylgruppen sind Methyl, Ethyl, n-Propyl und Cyclohexyl. Besonders bevorzugt ist Methyl. Bevorzugt handelt es sich bei dem Poly(dialkylsiloxan) b) also um ein Poly(dimethyl-siloxan).

Ganz besonders bevorzugt sind als Komponente b) Poly(dialkylsiloxane) der allgemeinen Formel (II),

Z'Y'X'Si-R'-A'_{n'}-(Si(CH₃)₂-O-)_{m'}-A'_{n"}-R'-SiX'Y'Z' (II),

worin
A' für -O-,
R' für eine direkte Bindung,
X' für Vinyl,
Y' und Z' unabhängig voneinander für Methoxy oder Ethoxy, insbesondere Methoxy,
n' für 1,
n" für 0 und
m' für eine ganze Zahl von 2 bis 5000, vorzugsweise 5 bis 2500, besonders bevorzugt 10 bis 1000 und ganz besonders bevorzugt 50 bis 500, steht.

Als Komponente c) enthalten die erfindungsgemäßen härtbaren Zusammensetzungen schließlich mindestens einen flammhemmenden Zusatz, ausgewählt aus rotem Phosphor, organischen Phosphorverbindungen, Ammoniumpolyphosphat, Metallhydroxiden, blähfähigem Graphit, Zinkborat und Melaminsalzen. Im Folgenden werden diese flammhemmenden Zusätze auch als Komponente c) oder flammhemmender Zusatz c) bezeichnet.

Bevorzugte organische Phosphorverbindungen sind Triphenylphosphat, Trikresylphosphat und halogenierte Phosphorsäureester, wobei unter den halogenierten Phosphorsäureestern ihrerseits Trichlorethylphosphat, Tris(2-chlorethyl)phosphat, Tris(2-chlorisopropyl)phosphat und Tris(2,3-dibrompropyl)phosphat bevorzugt ist. Bevorzugte Metallhydroxide sind Aluminiumhydroxid und Magnesiumhydroxid, bevorzugte Melaminsalze Melaminorthophosphat, Dimelaminorthophosphat, Dimelaminpyrophosphat, Melaminpolyphosphat und Melaminborat.

Gegebenenfalls wird Antimonoxid als Synergist zugegeben. Dies bietet sich insbesondere dann an, wenn als flammhemmender Zusatz halogenierte Phosphorsäureester zum Einsatz kommen.

In bestimmten Fällen ist es vorteilhaft, wenn die zum Einsatz kommenden Kleb-, Dicht- und Beschichtungsstoffe frei von halogen- und antimonhaltigen Verbindungen sind. In einer besonderen Ausführungsform sind die erfindungsgemäßen härtbaren Zusammensetzungen daher frei von halogen- und antimonhaltigen Verbindungen. In diesem Fall wird naturgemäß auch der flammhemmende Zusatz nur aus den Verbindungen ausgewählt, die halogen- und antimonfrei sind. Unter frei von halogen- und antimonhaltigen Verbindungen wird dabei verstanden, dass die Gesamtmenge an halogen- und antimonhaltigen Verbindungen in der härtbaren Zusammensetzung maximal 10 ppm, vorzugsweise maximal 1 ppm, bezogen auf das Gesamtgewicht der härtbaren Zusammensetzung, beträgt.

Vorzugsweise enthalten die erfindungsgemäßen härtbaren Zusammensetzungen mindestens einen flammhemmenden Zusatz, ausgewählt aus Aluminiumhydroxid, Magnesiumhydroxid, blähfähigem Graphit und Zinkborat. Besonders bevorzugt ist als flammhemmender Zusatz Aluminiumhydroxid enthalten.

Vorzugsweise beträgt in den erfindungsgemäßen härtbaren Zusammensetzungen das Gewichtsverhältnis der Gesamtmenge an organischem Polymer a) zur Gesamtmenge an Poly(dialkylsiloxan) b) von 5 : 1 bis 1 : 5, vorzugsweise von 3 : 1 bis 1 : 3, besonders bevorzugt von 2 : 1 bis 1 : 2. Enthält die härtbare Zusammensetzung mehrere organische Polymere a) und/oder mehrere Poly(dialkylsiloxane) b), so ist unter der Gesamtmenge natürlich die Summe der Menge aller Vertreter einer Komponente, d.h. die Summe der Menge aller organischen Polymere a) beziehungsweise die Summe der Menge aller Poly(dialkylsiloxane) b) zu verstehen.

Die Gesamtmenge an flammhemmendem Zusatz c) beträgt vorzugsweise mindestens 10 Gew.- %, vorzugsweise mindestens 25 Gew.-%, besonders bevorzugt mindestens 50 Gew.-%, jeweils bezogen auf das Gesamtgewicht der härtbaren Zusammensetzung. Wiederum ist unter Gesamtmenge die Summe der Menge aller Vertreter einer Komponente, in diesem Fall der Komponente c), zu verstehen.

Die erfindungsgemäßen Zusammensetzungen sind in der Regel bereits als solche als Kleb-, Dicht- oder Beschichtungsstoffe geeignet. Sie können neben den vorgenannten Komponenten a), b) und c) jedoch gegebenenfalls noch weitere Hilfs- und Zusatzstoffe enthalten, die ihnen zum Beispiel verbesserte elastische Eigenschaften, verbesserte Rückstellfähigkeit und geringe Restklebrigkeit verleihen. Zu diesen Hilfs- und Zusatzstoffen gehören Haftvermittler, Weichmacher und Füllstoffe. Weiterhin können die für härtbare Zusammensetzungen auf Basis silanmodifizierter Polymere üblicherweise verwendeten Härtungskatalysatoren, wie beispielsweise zinnorganische Verbindungen, vorgesehen sein. Darüber hinaus können die Zusammensetzungen weitere Additive, beispielsweise Stabilisatoren, Antioxidantien, Reaktivverdünner, Trockenmittel, UV-Stabilisatoren, Alterungsschutzmittel, rheologische Hilfsmittel, Farbpigmente oder Farbpasten, Fungizide, weitere Flammschutzmittel und/oder gegebenenfalls auch in geringem Umfang Lösungsmittel enthalten.

Die erfindungsgemäßen Zusammensetzungen können als einkomponentige feuchtigkeitshärtende Kleb-, Dicht- oder Beschichtungs-Zusammensetzungen ausgebildet sein. Dies ist insbesondere für Anwendungen zur Randversiegelung oder zur Ausbildung von sehr schmalen Klebe- und Dichtverbindungen angezeigt, da hierbei keine Komponenten gemischt werden müssen und die Aushärtung durch Diffusion von Wasserdampf aus dem Randbereich oder der Umgebung eine hinreichend schnelle Aushärtung gewährleistet. Für großflächige Verklebungen oder Beschichtungen, insbesondere nicht poröser Substrate, wird der Fachmann jedoch eine zwei- oder mehrkomponentige Ausführungsform bevorzugen, um eine hinreichende Aushärtung der Zusammensetzung sicherzustellen. Die erfindungsgemäßen Zusammensetzungen können entsprechend auch zwei- oder mehrkomponentig ausgebildet werden.

In der 2-komponentigen Ausführungsform der erfindungsgemäßen härtbaren Zusammensetzung können einer der Bestandteile a), b) und c) getrennt von den beiden anderen in unterschiedlichen Komponenten vorliegen, so dass erst nach Mischen der Komponenten eine härtbare Zusammensetzung entsteht, die die erfindungsgemäß vorgesehenen Bestandteile a), b) und c) enthält. Bevorzugt ist jedoch eine Ausführungsform, in der eine erste Komponente (Komponente A) bereits die Bestandteile a), b) und c) enthält, es sich hierbei also bereits um eine einkomponentig ausgebildete erfindungsgemäße härtbare Zusammensetzung handelt, und es sich bei der zweiten Komponente (Komponente B) um eine Beschleunigerkomponente handelt. Letztere wird auch als Härterkomponente bezeichnet. Bevorzugt ist dabei eine Komponente B, die mindestens Wasser sowie ein Verdickungsmittel enthält. Vorzugsweise enthält die Komponente B 1 bis 20 Gew.-%, vorzugsweise 3 bis 15 Gew.-% Wasser, wobei sich diese Mengenangabe auf das Gesamtgewicht der Komponente B bezieht. Das Wasser ist dabei vorzugsweise an anorganischen Verdickungsmitteln adsorbiert oder in organischen Verdickungsmitteln gelöst bzw. gequollen. Weiterhin kann die Komponente B ein Oligomer enthalten, vorzugsweise ein Polypropylenglykol, Polyethylenglykol oder ein Copolymer aus Propylenoxid und Ethylenoxid. Es können auch Mischungen verschiedener Polyoxyalkylene eingesetzt werden. Die Molekulargewichte des oder der Polyoxyalkylene liegen vorzugsweise zwischen 1000 und 20 000, bevorzugt zwischen 2000 und 12 000 g/mol.

Als Verdickungsmittel für die bevorzugte Ausführungsform werden wasserlösliche bzw. wasserquellbare Polymere oder anorganische Verdickungsmittel bevorzugt. Beispiele für organische natürliche Verdickungsmittel sind Agar-agar, Carrageen, Tragant, Gummi arabicum, Alginate, Pektine, Polyosen, Guar-Mehl, Stärke, Dextrine, Gelatine, Casein. Beispiele für organische voll- oder teilsynthetische Verdickungsmittel sind Carboxymethylcellulose, Cellulose-ether wie z.B. Tylose, Hydroxyethylcellulose, Hydroxypropylcellulose, Poly(meth)acrylsäurederivate, Polyvinylether, Polyvinylalkohol, Polyamide, Polyimine. Beispiele für anorganische Verdickungsmittel bzw. Adsorptionsmittel für das Wasser sind Polykieselsäuren, hochdisperse, pyrogene, hydrophile Kieselsäuren, Tonmineralien wie Montmorillonit, Kaolinit, Halloysit, Aluminiumhydroxid, Aluminiumoxidhydrat, Aluminiumsilikate, Talkum, Quarzmineralien, Magnesiumhydroxid oder dergleichen.

Vorzugsweise ist die Komponente B so ausgebildet, dass die Komponente A vor Anwendung mit der Komponente B in einem Verhältnis von 1 : 1 bis 200 : 1 Gewichtsteilen gemischt wird, um eine rasche und vollständige Aushärtung zu gewährleisten.

In der zwei- oder mehrkomponentigen Ausführungsform können sowohl die Komponente A, als auch die Komponente B die bereits genannten weiteren übliche Hilfs- und Zusatzstoffe enthalten.

So können ein oder mehrere Weichmacher enthalten sein. Unter einem Weichmacher wird eine Substanz verstanden, welche die Viskosität der Zusammensetzungen verringert und damit die Verarbeitbarkeit erleichtert und darüber hinaus Flexibilität und Dehnungsvermögen der Zusammensetzungen verbessert.

Der oder die Weichmacher ist / sind bevorzugt ausgewählt aus einem Fettsäureester, einem Dicarbonsäureester, einem Ester OH-Gruppen tragender oder epoxidierter Fettsäuren, einem Fett, einem Glykolsäureester, einem Phthalsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehr davon. Durch die gezielte Auswahl eines dieser Weichmacher oder einer spezifischen Kombination können weitere vorteilhafte Eigenschaften der erfindungsgemäßen Zusammensetzung, z. B. Geliervermögen der Polymere, Kälteelastizität bzw. Kältebeständigkeit oder auch antistatische Eigenschaften realisiert werden.

Beispielsweise eignen sich aus der Gruppe der Phthalsäureester Dioctylphthalat, Dibutylphthalat, Düsoundecylphthalat, Diisononylphthalat oder Butylbenzylphthalat, von den Adipaten Dioctyladipat, Diisodecyladipat, ferner Diisodecylsuccinat, Dibutylsebacat oder Butyloleat. Von den Polyether-Weichmachern werden bevorzugt endgruppenverschlossene Polyethylenglykole eingesetzt, beispielsweise Polyethylen- oder Polypropylenglykoldi - C₁ - C₄ - alkylether, insbesondere die Dimethyl- oder Diethylether von Diethylenglykol oder Dipropylenglykol, sowie Gemische aus zwei oder mehr davon. Ebenfalls als Weichmacher geeignet sind beispielsweise Ester der Abietinsäure, Buttersäureester, Essigsäureester, Propionsäureester, Thiobuttersäureester, Zitronensäureester sowie Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf). Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf). Aus der Gruppe der Phosphorsäureester sind beispielsweise Trikresylphosphat, Triphenylphosphat, Diphenylkresylphosphat, Diphenyloctylphosphat, (2-Ethylhexyl)-diphenylphosphat, Tris(2-ethylhexyl)-phosphat und Tris(2-butoxyethyl)phosphat geeignet. Neben ihrer Funktion als Weichmacher besitzen organische Phosphorsäureester auch flammhemmende Eigenschaften, so dass sie in den erfindungsgemäßen Zusammensetzungen gleichzeitig als Komponente c) und als Weichmacher fungieren.

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Eine für bestimmte Anwendungen zu hohe Viskosität der erfindungsgemäßen Zusammensetzung kann auch durch Verwendung mindestens eines Reaktivverdünners auf einfache und zweckmäßige Weise verringert werden, ohne dass es zu Entmischungserscheinungen (z.B. Weichmacherwanderung) in der ausgehärteten Masse kommt. Vorzugsweise weist der Reaktivverdünner mindestens eine funktionelle Gruppe auf, die nach der Applikation zum Beispiel mit Feuchtigkeit oder Luftsauerstoff reagiert. Beispiele für derartige Gruppen sind Silylgruppen. Als Reaktivverdünner kann man alle Verbindungen, die mit der erfindungsgemäßen Zusammensetzung unter Verringerung der Viskosität mischbar sind und über mindestens eine mit dem Bindemittel reaktive Gruppe verfügen, allein oder als Kombination mehrerer Verbindungen einsetzen.

Zur Reduzierung der Viskosität der erfindungsgemäßen Zusammensetzung lassen sich neben oder anstatt eines Reaktivverdünners auch Lösungsmittel einsetzen. Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester.

Die erfindungsgemäße härtbare Zusammensetzung kann außerdem als weiteren Bestandteil mindestens einen Katalysator (Silan-Kondensationskatalysator bzw. Härtungs- oder Vernetzungskatalysator) umfassen. Als Vernetzungskatalysatoren zur Steuerung der Härtungsgeschwindigkeit der erfindungsgemäßen Zusammensetzungen sind beispielsweise metallorganische Verbindungen wie Eisen- oder Zinnverbindungen geeignet, insbesondere die 1,3-Dicarbonylverbindungen des Eisens wie z. B. Eisen-(III)-acetylacetonat oder des zwei- bzw. vierwertigen Zinns wie beispielsweise Dibutylzinnbisacetylacetonat, die Dialkylzinn-(IV)-Dicarboxylate - z. B. Dibutylzinndilaurat, Dibutylzinnmaleat oder Dibutylzinndiacetat - oder die entsprechenden Dialkoxylate, z. B. Dibutylzinndimethoxid. Gerade bei den zinnorganischen Verbindungen handelt es sich um wohl erprobte und einfach zugängliche Katalysatoren mit ausgezeichneter Aktivität.

Als Härtungskatalysatoren können alternativ Borhalogenide wie Bortrifluorid, Bortrichlorid, Bortribromid, Bortrijodid oder gemischte Borhalogenide eingesetzt werden. Besonders bevorzugt sind Bortrifluoridkomplexe wie z.B. Bortrifluorid-diethyletherat, die als Flüssigkeiten einfacher handhabbar sind als gasförmige Borhalogenide.

Ferner sind im Allgemeinen Amine, Stickstoff-Heterocyclen und Guanidin-Derivate zur Katalyse geeignet. Ein besonders geeigneter Katalysator aus dieser Gruppe ist 1,8-Diazabicyclo-[5.4.0]-undec-7-en (DBU).

Darüber hinaus werden als Katalysatoren vorzugsweise Titan-, Aluminium- und Zirkonverbindungen oder Mischungen aus einem oder mehreren Katalysatoren aus einer oder mehreren der gerade erwähnten Gruppen eingesetzt. Einerseits kann auch auf diese Weise der Einsatz von Zinnverbindungen vermieden werden, zum anderen lässt sich eine bessere Adhäsion zu normalerweise schlecht anhaftenden organischen Oberflächen wie z. B. Acrylaten erreichen. Unter den Titan-, Aluminium- und Zirkonkatalysatoren werden die Titankatalysatoren bevorzugt eingesetzt, da mit ihnen die besten Härtungsergebnisse erzielt werden.

Die erfindungsgemäße Zusammensetzung kann außerdem einen oder mehrere Haftvermittler umfassen. Unter einem Haftvermittler wird eine Substanz verstanden, die die Haftungseigenschaften von Klebeschichten auf Oberflächen verbessert. Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- od. β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, *α*-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole. Gut geeignet sind ferner Silan-Haftvermittler, insbesondere Aminosilane.

In einer speziellen Ausführungsform der erfindungsgemäßen härtbaren Zusammensetzung umfasst die Zusammensetzung ein Silan der allgemeinen Formel (III)

R²R³N-R⁴-SiX¹Y¹Z¹ (III)

als Haftvermittler, worin
R² und R³ unabhängig voneinander Wasserstoff oder C₁ - C₈ -Alkylreste,
R⁴ ein zweibindiger gegebenenfalls ein oder mehrere Heteroatome enthaltender Kohlenwasserstoffrest mit 1 - 12 C-Atomen, und
X¹, Y¹, Z¹ unabhängig voneinander C₁ - C₈ - Alkyl-, C₁ - C₈ - Alkoxy- oder C₁ - C₈ - Acyloxyreste sind, wobei mindestens einer der Reste eine C₁ - C₈ - Alkoxy- oder C₁ - C₈ - Acyloxygruppe ist. Derartige Verbindungen weisen naturgemäß eine hohe Affinität zu den bindenden Polymerkomponenten der erfindungsgemäßen härtbaren Zusammensetzung, aber auch zu einer großen Bandbreite an polaren sowie unpolaren Oberflächen auf und tragen deshalb zur Ausbildung einer besonders stabilen Haftung zwischen der Klebstoffzusammensetzung und den jeweils zu verklebenden Substraten bei. Bei der Gruppe R⁴ kann es sich beispielsweise um einen geradkettigen oder verzweigten oder cyclischen, substituierten oder unsubstituierten Alkylenrest handeln. Gegebenenfalls ist als Heteroatom darin Stickstoff (N) oder Sauerstoff (O) enthalten. Wenn X¹, Y¹ und/oder Z¹ eine Acyloxygruppe sind, kann dies z. B. die Acetoxygruppe -OCO-CH₃ sein.

Als Füllstoffe für die erfindungsgemäße Zusammensetzung eignen sich beispielsweise Kreide, Kalkmehl, gefällte und/oder pyrogene Kieselsäure, Zeolithe, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet. Darüber hinaus eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger. Für manche Anwendungen sind Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe wie PVC. Damit sie gut aus einer geeigneten Dosiervorrichtung (z. B. Tube) ausgepresst werden können, besitzen solche Zubereitungen eine Viskosität von 3.000 bis 15.000, vorzugsweise 4.000 bis 8.000 mPas oder auch 5.000 bis 6.000 mPas.

Die Füllstoffe werden vorzugsweise in einer Menge von 1 bis 80 Gew.-%, bezogen auf das Gesamtgewicht der Zusammensetzung, eingesetzt. Es kann ein einzelner Füllstoff oder eine Kombination mehrerer Füllstoffe verwendet werden.

Ferner kann die erfindungsgemäße Zusammensetzung einen oder mehrere Antioxidantien enthalten. Vorzugsweise beträgt der Anteil der Antioxidantien an der erfindungsgemäßen Zusammensetzung bis zu etwa 7 Gew.-%, insbesondere bis zu etwa 5 Gew.-%, bezogen auf das Gesamtgewicht der Zusammensetzung. Die erfindungsgemäße Zusammensetzung kann darüber hinaus UV-Stabilisatoren enthalten. Vorzugsweise beträgt der Anteil der UV-Stabilisatoren an der erfindungsgemäßen Zusammensetzung bis zu etwa 2 Gew.-%, insbesondere etwa 1 Gew.-%. Als UV-Stabilisatoren besonders geeignet sind die so genannten Hindered Amine Light Stabilisators (HALS). Es können ein oder mehrere UV-Stabilisatoren eingesetzt werden, der / die eine Silylgruppe trägt / tragen und beim Vernetzen bzw. Aushärten in das Endprodukt eingebaut wird / werden. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate und/oder sterisch gehinderte Phenole zugegeben werden.

Häufig ist es sinnvoll, die erfindungsgemäßen Zusammensetzungen weiter gegenüber eindringender Feuchtigkeit zu stabilisieren, um die Lagerfähigkeit (shelf-life) noch stärker zu erhöhen. Eine solche Verbesserung der Lagerfähigkeit lässt sich beispielsweise durch den Einsatz von Trockenmitteln erreichen. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren.

Vorteilhaft werden als Trockenmittel Silane eingesetzt, beispielsweise Vinylsilane wie 3-Vinylpropyltriethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-1) oder Benzamidosilane wie Bis(N-methylbenzamido)methylethoxysilan (CAS Nr. 16230-35-6) oder Carbamatosilane wie Carbamatomethyltrimethoxysilan. Aber auch die Verwendung von Methyl-, Ethyl- oder Vinyltrimethoxysilan, Tetramethyl- oder-ethylethoxysilan ist möglich. Besonders bevorzugt sind hier Vinyltrimethoxysilan und Tetraethoxysilan hinsichtlich Effizienz und Kosten. Ebenfalls als Trockenmittel geeignet sind die oben genannten Reaktivverdünner, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen des erfindungsgemäßen Silyl-Gruppen tragenden Polymers. Schließlich können als Trockenmittel auch Alkylorthoformiate oder -orthoacetate eingesetzt werden, beispielsweise Methyl- oder Ethylorthoformiat, Methyl-oder Ethylorthoacetat. Die erfindungsgemäße Zusammensetzung enthält in der Regel etwa 0,01 bis etwa 10 Gew.-% Trockenmittel.

Die Viskosität der erfindungsgemäßen härtbaren Zusammensetzung beträgt bevorzugt weniger als 1.000.000 mPas (gemessen mit einem Brookfield Viskosimeter Typ RVDVII +, Spindel Nr. 7, 10 Upm bei 23 °C). Besonders bevorzugt ist die Viskosität der erfindungsgemäßen Zusammensetzung kleiner als 500.000 mPas. Insbesondere ist die Viskosität der Zusammensetzung kleiner als 250.000 mPas. Diese Viskositäten ermöglichen eine gute Verarbeitbarkeit der Zusammensetzungen.

Ein weiterer Gegenstand der vorliegenden Erfindung ist die Verwendung einer erfindungsgemäßen härtbaren Zusammensetzung als Kleb-, Dicht- oder Beschichtungsstoff, insbesondere als Klebstoff zum Verkleben von Kunststoffen, Metallen, Glas, Keramik, Holz, Holzwerkstoffen, Papier, Papierwerkstoffen, Gummi und Textilien, als Dichtstoff im Gebäudebau, insbesondere zum Verfugen im Sanitär- oder Küchenbereich, oder als Beschichtungsstoff zum Beschichten großflächiger Substrate.

Bevorzugt finden die erfindungsgemäßen härtbaren Zusammensetzungen Verwendung zur Ausrüstung eines Substrats mit einer flammhemmenden, elastischen Beschichtung. Aufgrund des sehr breiten Haftspektrums der erfindungsgemäßen härtbaren Zusammensetzungen können Substrate unterschiedlichsten Materials beschichtet werden. Vorzugsweise handelt es sich bei dem Substrat um geschäumtes Glas, wie es beispielsweise unter der Bezeichnung Foamglas^{®} kommerziell erhältlich ist.

Ein weiterer Gegenstand der vorliegenden Erfindung ist eine Beschichtung, hergestellt durch Aufbringen einer erfindungsgemäßen härtbaren Zusammensetzung auf ein zu beschichtendes Substrat, insbesondere auf geschäumtes Glas, und Aushärten der Zusammensetzung. Schließlich ist auch die Verwendung mindestens eines Poly(dialkylsiloxans) b) zur Verbesserung des Brandverhaltens einer härtbaren Zusammensetzung, umfassend mindestens ein organisches Polymer a), und vorzugsweise zusätzlich mindestens einen flammhemmenden Zusatz c), Gegenstand der Erfindung. In Bezug auf die Poly(dialkylsiloxane) b), die organischen Polymere a) und die flammhemmenden Zusätze c) und deren bevorzugten Ausgestaltungen gelten die oben bei der Beschreibung der erfindungsgemäßen härtbaren Zusammensetzung gemachten Ausführungen entsprechend.

Grundsätzlich können in der vorliegenden Erfindung alle im Rahmen des vorliegenden Textes aufgeführten Merkmale, insbesondere die als bevorzugt und/oder speziell ausgewiesenen Ausführungsformen, Anteilsbereiche, Bestandteile und sonstigen Merkmale der erfindungsgemäßen Zusammensetzung und der erfindungsgemäßen Verwendungen in allen möglichen und sich nicht gegenseitig ausschließenden Kombinationen verwirklicht sein, wobei Kombinationen von als bevorzugt und/oder speziell ausgewiesenen Merkmalen ebenfalls als bevorzugt und/oder speziell angesehen werden.

Im Folgenden wird die Erfindung anhand von Ausführungsbeispielen näher erläutert, wobei die Auswahl der Beispiele keine Beschränkung des Umfangs der Erfindungsgegenstände darstellt.

### Beispiele

Soweit nicht anders angegeben, beziehen sich alle Teile und Prozentsätze auf das Gewicht.

### Beispiel 1 und 2:

In einem Schnellmischer wurden unter Feuchtigkeitsausschluss die in Tabelle 1 genannten Bestandteile miteinander vermischt. Die dabei resultierenden erfindungsgemäßen härtbaren Zusammensetzungen können als einkomponentige Kleb-, Dicht- und Beschichtungsstoffe Verwendung finden. Sie können aber auch als Komponente A einer erfindungsgemäßen zweikomponentigen härtbaren Zusammensetzung zum Einsatz kommen. In letzterem Fall werden sie vor der Anwendung mit einer Härterkomponente B vermischt. Eine geeignete Härterkomponente B ist in Beispiel 3 wiedergegeben.

**Tabelle 1**

| Beispiel | 1 | 2 |
|---|---|---|
| Organisches Polymer a)¹ | 14,00 | 14,00 |
| Poly(dialkylsiloxan) b)² | 15,00 | 14,00 |
| Al(OH)₃ | 53,95 | 52,95 |
| Diisoundecylphthalat | 8,10 | |
| Diisononylphthalat | | 10,11 |
| Farbpaste | 0,80 | 0,80 |
| Alterungsschutz | 1,40 | 1,40 |
| TiO₂ | 2,90 | 2,90 |
| Tinuvin 328³ | 0,30 | 0,30 |
| Rilanit Spezial Micro W⁴ | 1,00 | 1,00 |
| Vinyltrimethoxysilan | 1,50 | 1,50 |
| 3-Aminopropyltrimethoxysilan | 0,50 | 0,50 |
| Dynasylan 1146⁵ | 0,50 | 0,50 |
| Dioctylbis(acetylacetonato)zinn | 0,05 | 0,04 |
| | | |
| Summe | 100,00 | 100,00 |

| | | |
|---|---|---|
| 1. γ-Silan-terminiertes Polypropylenglykol mit Trimethoxysilylpropylcarbamat-Endgruppen. 2. Erhalten durch Umsetzung eines Hydroxy-terminierten Polydimethylsiloxans (Viskosität bei 23°C gemäß DIN 53018: 20.000 mPa s; erhältlich von der Firma Wacker unter der Bezeichnung Polymer FD 20) mit Vinyltrimethoxysilan in Gegenwart eines LiOH/MeOH-Katalysators. 3. UV-Absorber: 2-(2H-Benzotriazol-2-yl)-4,6-di-tert-pentyl-phenol. 4. Rheologiehilfsmittel: gehärtetes Rizinusöl. 5. Haftvermittler: oligomeres Diaminosilansystem, erhältlich von der Firma Degussa. | | |

### Beispiel 3:

Eine Härterkomponente B wurde durch Mischen der in Tabelle 2 aufgeführten Bestandteile hergestellt:

**Tabelle 2**

| | |
|---|---|
| Propoxyliertes Glyzerin (Acclaim 6300, Firma Bayer) | 48,64 |
| Calciumcarbonat | 38,00 |
| Monoethylenglycol, destilliert | 3,00 |
| Methylhydroxyethylcellulose (Tylose MH, Firma Shin-Etsu) | 0,36 |
| Wasser | 10,00 |
| | |
| Summe | 100,00 |

### Beispiele 4 bis 5:

Jeweils 10 Teile einer Zusammensetzung gemäß Beispiel 1 bzw. 2 wurden in einem Schnellmischer mit 1 Teil der Härterkomponente B gemäß Beispiel 3 vermischt und die resultierenden Mischungen (Beispiel 4 bzw. 5) bezüglich des Haftverhaltens auf verschiedenen Substraten, wesentlicher Parameter des Härtungsverhaltens, der mechanischen Eigenschaften der ausgehärteten Produkte und deren Brandverhalten untersucht. Die Ergebnisse sind folgenden Tabellen zu entnehmen.

**Tabelle 3: Haftung**

| Beispiel | 4 | 5 |
|---|---|---|
| Lagerung: NK | | |
| Haftung auf Alu eloxiert | 1 | 1 |
| Haftung auf Stahlblech feuerverzinkt | 1 | 1 |
| Haftung auf V2A 4301 | 1 | 1 |
| Haftung auf Alu 99,5 | 1 | 1 |
| Haftung auf Stahl roh | 1 | 1 |
| Haftung auf Polyamid 66 | 1 | 1 |
| Haftung auf Hart-PVC | 1 | 1 |
| Haftung auf glasfaserverstärktem Epoxidharz | 1 | 1 |
| | | |

| Lagerung: SW | | |
|---|---|---|
| Haftung auf Alu eloxiert | 1 | 1 |
| Haftung auf Stahlblech feuerverzinkt | 1 | 4 |
| Haftung auf V2A 4301 | 1 | 1 |
| Haftung auf Alu 99,5 | 1 | 1 |
| Haftung auf Stahl roh | 1 | 4 |
| Haftung auf Polyamid 66 | 1 | 1 |
| Haftung auf Hart-PVC | 1 | 1 |
| Haftung auf glasfaserverstärktem Epoxidharz | 4 | 4 |

In der Tabelle bedeuten:
NK: Lagerung für 7 Tage bei Normklima (50% relative Luftfeuchtigkeit, 23°C).
SW: Lagerung für 7 Tage bei Normklima (50% relative Luftfeuchtigkeit, 23°C) und anschließend 7 Tage bei 98% relativer Luftfeuchtigkeit und 40°C.
Haftung: 1 = Haftung in Ordnung, >95 % kohäsiver Bruch; 4 = Haftung nicht in Ordnung, < 25 % kohäsiver Bruch.

Die Ergebnisse zeigen, dass die erfindungsgemäßen Zusammensetzungen unter Normbedingungen auf allen untersuchten Substraten zuverlässig haften. Selbst nach Lagerung unter sehr ungünstigen Umgebungsbedingungen ist das Haftverhalten gegenüber vielen Substraten ausgezeichnet. Nur auf wenigen als problematisch bekannten Untergründen lassen sich unter diesen Bedingungen Haftprobleme feststellen, wobei durch Wahl und Menge an Weichmachern die erfindungsgemäßen Zusammensetzungen auch hinsichtlich des Haftverhaltens auf diesen Untergründen positiv beeinflusst werden können.

In der nachfolgenden Tabelle 4 sind die Festigkeitseigenschaften der erfindungsgemäßen Zusammensetzungen gemäß der Beispiele 4 und 5 zusammengefasst. Dazu wurden die oben genannten Mischungen hergestellt und zu flachen Platten mit einer Schichtstärke von 2 mm verarbeitet. Aus diesen wurden nach 7 Tagen Lagerung (23 °C, 50 % relative Luftfeuchtigkeit) Probenkörper (S2-Prüfkörper) ausgestanzt und die mechanischen Daten (E-Module bei 10, 25, 50 und 100 % Dehnung, Bruchdehnung und Reißfestigkeit) in Anlehnung an DIN EN 27389 und DIN EN 28339 bestimmt.

**Tabelle 4: Härtungsverhalten und mechanische Eigenschaften**

| Beispiel | 4 | 5 |
|---|---|---|
| Topfzeit [min] | 11-13 | 12-14 |
| Shore- A | 47 | 44 |
| Mechanik S2 Prüfkörper | | |
| 10% Modul N/mm² | 0,16 | 0,08 |
| 25% Modul N/mm² | 0,47 | 0,30 |
| 50% Modul N/mm² | 0,96 | 0,64 |
| 100% Modul N/mm² | 1,80 | 1,25 |
| Reißfestigkeit N/mm² | 2,52 | 2,15 |
| Bruchdehnung % | 156 | 196 |

Zur Untersuchung des Brandverhaltens wurden erfindungsgemäße Zusammensetzungen gemäß der Beispiele 4 und 5 in einer Schichtstärke von 2 mm auf V2A Platten (20 cm x 10 cm x 3 mm) aufgezogen. Die Beschichtungen wurden 7 Tage bei 23 °C und 50 % relativer Luftfeuchtigkeit gehärtet. Zu Vergleichszwecken wurde ein entsprechender Prüfkörper unter Verwendung eines handelsüblichen Beschichtungsstoffs (Terostat 939 FR) hergestellt. Die so erhaltenen Probenkörper wurden mittels einer Lötlampe (T > 1100 °C) im 90° Winkel für 60 Sekunden beflammt. Nach 60 Sekunden wurde die Lötlampe entfernt und das Weiterbrandverhalten der Prüfkörper beobachtet. Die Ergebnisse sind in Tabelle 5 wiedergegeben.

**Tabelle 5: Brandverhalten**

| Beispiel | 4 | 5 | Vergleich |
|---|---|---|---|
| Nachbrennzeit [s] | 10 | 13 | > 60 |

Die erfindungsgemäßen Zusammensetzungen zeigen ein deutlich besseres Brandverhalten als der handelsübliche Beschichtungsstoff. Alle Probenkörper brennen nach Entfernen der Lötlampe zunächst mit gelber Flamme weiter. Während die Probenkörper auf Basis der erfindungsgemäßen Zusammensetzungen jedoch nach kurzer Zeit von selbst erlöschen, brennt der Vergleichsprüfkörper auch nach über einer Minute noch weiter.

## Patentansprüche

1. Härtbare Zusammensetzung, umfassend
a) mindestens ein organisches Polymer, ausgewählt aus Polyethern und Polyacrylsäureestern, wobei das organische Polymer mindestens eine Endgruppe der allgemeinen Formel (I)
-Aₙ-R-SiXYZ (I)
aufweist, worin
A für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht,
R ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
X, Y, Z unabhängig voneinander C₁ - C₈ - Alkyl-, C₁ - C₈ - Alkoxy- oder C₁ - C₈ - Acyloxyreste sind, wobei mindestens einer der Reste eine C₁ - C₈ - Alkoxy- oder C₁ - C₈ - Acyloxygruppe ist, und
n 0 oder 1 ist,
b) mindestens ein Poly(dialkylsiloxan) mit mindestens einer Endgruppe der allgemeinen Formel (I')
-A'ₙ-R'-SiX'Y'Z' (I'),
worin
A' für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht, R' eine direkte Bindung oder ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
X', Y', Z' unabhängig voneinander Vinylreste, C₁ - C₈ - Alkoxy- oder C₁ - C₈ - Acyloxyreste sind, wobei mindestens einer der Reste eine Vinylgruppe und mindestens einer der Reste eine C₁ - C₈ - Alkoxy- oder C₁ - C₈ - Acyloxygruppe ist, und
n' 0 oder 1 ist, und
c) mindestens einen flammhemmenden Zusatz, ausgewählt aus rotem Phosphor, organischen Phosphorverbindungen, Ammoniumpolyphosphat, Metallhydroxiden, blähfähigem Graphit, Zinkborat und Melaminsalzen.

2. Härtbare Zusammensetzung gemäß Anspruch 1, **dadurch gekennzeichnet, dass** das organische Polymer mindestens eine Endgruppe der allgemeinen Formel (I) aufweist, wobei R für einen Methylen- oder 1,3-Propylenrest steht.

3. Härtbare Zusammensetzung gemäß mindestens einem der vorstehenden Ansprüche, **dadurch gekennzeichnet, dass** das organische Polymer mindestens eine Endgruppe der allgemeinen Formel (I) aufweist, wobei X, Y und Z jeweils unabhängig voneinander für Methyl, Ethyl, Methoxy oder Ethoxy stehen, mit der Maßgabe, dass mindestens zwei der Reste X, Y und Z für Methoxy oder Ethoxy stehen.

4. Härtbare Zusammensetzung gemäß mindestens einem der vorstehenden Ansprüche, **dadurch gekennzeichnet, dass** es sich bei dem organischen Polymer um einen Polyether, ausgewählt aus Polyethylenglykolen, Polypropylenglykolen und Ethylenglykol-Propylenglykol-Copolymeren, oder einen Polyacrylsäure - C₁ - C₄ - alkylester handelt.

5. Härtbare Zusammensetzung gemäß mindestens einem der vorstehenden Ansprüche, **dadurch gekennzeichnet, dass** es sich bei dem Poly(dialkylsiloxan) um ein Poly(dimethyl-siloxan) handelt.

6. Härtbare Zusammensetzung gemäß mindestens einem der vorstehenden Ansprüche, **dadurch gekennzeichnet, dass** das Poly(dialkylsiloxan) mindestens eine Endgruppe der allgemeinen Formel (I') aufweist, wobei A' für-O- und R' für eine direkte Bindung stehen.

7. Härtbare Zusammensetzung gemäß mindestens einem der vorstehenden Ansprüche, **dadurch gekennzeichnet, dass** das Poly(dialkylsiloxan) mindestens eine Endgruppe der allgemeinen Formel (I') aufweist, wobei X' für Vinyl und Y' und Z' unabhängig voneinander für Methoxy oder Ethoxy stehen.

8. Härtbare Zusammensetzung gemäß mindestens einem der vorstehenden Ansprüche, **dadurch gekennzeichnet, dass** der flammhemmende Zusatz ausgewählt ist aus Aluminiumhydroxid, Magnesiumhydroxid, blähfähigem Graphit und Zinkborat.

9. Härtbare Zusammensetzung gemäß Anspruch 8, **dadurch gekennzeichnet, dass** der flammhemmende Zusatz Aluminiumhydroxid ist.

10. Härtbare Zusammensetzung gemäß mindestens einem der vorstehenden Ansprüche, **dadurch gekennzeichnet, dass** das Gewichtsverhältnis der Gesamtmenge an organischem Polymer a) zur Gesamtmenge an Poly(dialkylsiloxan) b) von 5 : 1 bis 1 : 5, vorzugsweise von 3 : 1 bis 1 : 3, besonders bevorzugt von 2 : 1 bis 1 : 2 beträgt.

11. Härtbare Zusammensetzung gemäß mindestens einem der vorstehenden Ansprüche, **dadurch gekennzeichnet, dass** die Gesamtmenge an flammhemmendem Zusatz c) mindestens 10 Gew.-%, vorzugsweise mindestens 25 Gew.-%, besonders bevorzugt mindestens 50 Gew.- %, jeweils bezogen auf das Gesamtgewicht der härtbaren Zusammensetzung, beträgt.

12. Verwendung einer härtbaren Zusammensetzung gemäß mindestens einem der vorstehenden Ansprüche als Kleb-, Dicht- oder Beschichtungsstoff.

13. Verwendung einer härtbaren Zusammensetzung gemäß mindestens einem der Ansprüche 1 bis 11 zur Ausrüstung eines Substrats mit einer flammhemmenden, elastischen Beschichtung.

14. Beschichtung, hergestellt durch Aufbringen einer härtbaren Zusammensetzung gemäß mindestens einem der Ansprüche 1 bis 11 auf ein zu beschichtendes Substrat und Aushärten der Zusammensetzung.

15. Verwendung mindestens eines Poly(dialkylsiloxans) mit mindestens einer Endgruppe der allgemeinen Formel (I')
-A'ₙ-R'-SiX'Y'Z' (I'),
worin
A' für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht,
R' eine direkte Bindung oder ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
X', Y', Z' unabhängig voneinander Vinylreste, C₁ - C₈ - Alkoxy- oder C₁ - C₈ - Acyloxyreste sind, wobei mindestens einer der Reste eine Vinylgruppe und mindestens einer der Reste eine C₁ - C₈ - Alkoxy- oder C₁ - C₈ - Acyloxygruppe ist, und
n' 0 oder 1 ist,
zur Verbesserung des Brandverhaltens einer härtbaren Zusammensetzung, umfassend mindestens ein organisches Polymer, ausgewählt aus Polyethern und Polyacrylsäureestern, wobei das organische Polymer mindestens eine Endgruppe der allgemeinen Formel (I)
-Aₙ-R-SiXYZ (I)
aufweist, worin
A für eine zweibindige Verknüpfungseinheit, ausgewählt aus der Amid-, Carbamat-, Harnstoff-, Imino-, Carboxylat-, Carbamoyl-, Amidino-, Carbonat-, Sulfonat- und Sulfinatgruppe und dem Sauerstoff- und Stickstoffatom, steht,
R ein zweibindiger Kohlenwasserstoffrest mit 1 bis 12 C-Atomen ist, dessen Kohlenwasserstoffhauptkette gegebenenfalls durch ein Heteroatom unterbrochen sein kann, und
X, Y, Z unabhängig voneinander C₁ - C₈ - Alkyl-, C₁ - C₈ - Alkoxy- oder C₁ - C₈ - Acyloxyreste sind, wobei mindestens einer der Reste eine C₁ - C₈ - Alkoxy- oder C₁ - C₈ - Acyloxygruppe ist, und
n 0 oder 1 ist.

## Claims

1. A curable composition, comprising
a) at least one organic polymer, selected from polyethers and polyacrylic acid esters, wherein the organic polymer possesses at least one end group of the general Formula (I)
-Aₙ-R-SiXYZ (I)
in which
A stands for a divalent linking residue, selected from the amide, carbamate, urea, imino, carboxylate, carbamoyl, amidino, carbonate, sulfonate and sulfinate group and from the oxygen atom and nitrogen atom,
R is a divalent hydrocarbon residue with 1 to 12 carbon atoms whose main hydrocarbon chain can optionally be interrupted by a hetero atom, and
X, Y, Z independently of one other stand for C₁-C₈ alkyl, C₁-C₈ alkoxy or C₁-C₈ acyloxy residues, wherein at least one of the residues is a C₁-C₈ alkoxy or C₁-C₈ acyloxy group, and
n is 0 or 1,
b) at least one poly(dialkylsiloxane) with at least one end group of the general Formula (I')
-A'_{n'}R'-SiX'Y'Z' (I'),
in which
A' stands for a divalent linking group, selected from the amide, carbamate, urea, imino, carboxylate, carbamoyl, amidino, carbonate, sulfonate and sulfinate group and from the oxygen atom and nitrogen atom,
R' is a direct bond or a divalent hydrocarbon residue with 1 to 12 carbon atoms whose main hydrocarbon chain can optionally be interrupted by a hetero atom, and
X', Y', Z' independently of one other are vinyl residues, C₁-C₈ alkoxy or C₁-C₈ acyloxy residues, wherein at least one of the residues is a vinyl group and at least one of the residues is a C₁-C₈ alkoxy or C₁-C₈ acyloxy group, and
n' is 0 or 1, and
c) at least one flame retardant additive, selected from red phosphorus, organic phosphorous compounds, ammonium polyphosphate, metal hydroxides, expandable graphite, zinc borate and melamine salts.

2. The curable composition according to claim 1, **characterised in that** the organic polymer possesses at least one end group of the general Formula (I), wherein R stands for a methylene or 1,3-propylene residue.

3. The curable composition according to at least one of the previous claims, **characterised in that** the organic polymer possesses at least one end group of the general Formula (I), wherein X, Y and Z each independently of one another stand for methyl, ethyl, methoxy or ethoxy, with the proviso that at least two of the X, Y and Z residues stand for methoxy or ethoxy.

4. The curable composition according to at least one of the previous claims, **characterised in that** the organic polymer is a polyether, selected from polyethylene glycols, polypropylene glycols and ethylene glycol- propylene glycol copolymers, or a polyacrylic acid C₁-C₄alkyl ester.

5. The curable composition according to at least one of the previous claims, **characterised in that** the poly(dialkylsiloxane) is a poly(dimethylsiloxane).

6. The curable composition according to at least one of the previous claims, **characterised in that** the poly(dialkylsiloxane) possesses at least one end group of the general Formula (I'), wherein A' stands for -O- and R' stands for a direct bond.

7. The curable composition according to at least one of the previous claims, **characterised in that** the poly(dialkylsiloxane) possesses at least one end group of the general Formula (I'), wherein X' stands for vinyl and Y' and Z' independently of one another stand for methoxy or ethoxy.

8. The curable composition according to at least one of the previous claims, **characterised in that** the flame retardant additive is selected from aluminum hydroxide, magnesium hydroxide, expandable graphite and zinc borate.

9. The curable composition according to claim 8, **characterised in that** the flame retardant additive is aluminum hydroxide.

10. The curable composition according to at least one of the previous claims, **characterised in that** the weight ratio of the total amount of organic polymer a) to the total amount of poly(dialkylsiloxane) b) is 5: 1 to 1: 5, preferably 3: 1 to 1: 3, particularly preferably 2: 1 to 1: 2.

11. The curable composition according to at least one of the previous claims, **characterised in that** the total amount of flame retardant additive c) is at least 10 wt %, preferably at least 25 wt %, particularly preferably at least 50 wt %, each relative to the total weight of the curable composition.

12. Use of a curable composition according to at least one of the previous claims as an adhesive, sealant or coating material.

13. Use of a curable composition according to at least one of the claims 1 to 11 for providing a substrate with a flame retardant, elastic coating.

14. A coating, manufactured by depositing a curable composition according to at least one of the claims 1 to 11 onto a substrate to be coated, and curing the composition.

15. Use of at least one poly(dialkylsiloxane) with at least one end group of the general Formula (I')
-A'_{n'}R'-SiX'Y'Z' (I'),
in which
A' stands for a divalent linking group, selected from the amide, carbamate, urea, imino, carboxylate, carbamoyl, amidino, carbonate, sulfonate and sulfinate group and from the oxygen atom and nitrogen atom,
R¹ is a direct bond or a divalent hydrocarbon residue with 1 to 12 carbon atoms whose main hydrocarbon chain can optionally be interrupted by a hetero atom, and
X', Y', Z' independently of one other are vinyl residues, C₁-C₈ alkoxy or C₁-C₈ acyloxy residues, wherein at least one of the residues is a vinyl group and at least one of the residues is a C₁-C₈ alkoxy or C₁-C₈ acyloxy group, and
n' is 0 or 1,
for improving the fire performance of a curable composition, containing at least one organic polymer, selected from polyethers and polyacrylic acid esters, wherein the organic polymer possesses at least one end group of the general Formula (I)
-Aₙ-R-SiXYZ (I)
in which
A stands for a divalent linking group, selected from the amide, carbamate, urea, imino, carboxylate, carbamoyl, amidino, carbonate, sulfonate and sulfinate group and from the oxygen atom and nitrogen atom,
R is a divalent hydrocarbon residue with 1 to 12 carbon atoms whose main hydrocarbon chain can optionally be interrupted by a hetero atom, and
X, Y, Z independently of one other stand for C₁-C₈ alkyl, C₁-C₈ alkoxy or C₁-C₈ acyloxy residues, wherein at least one of the residues is a C₁-C₈ alkoxy or C₁-C₈ acyloxy group, and
n is 0 or 1.

## Revendications

1. Composition durcissable comprenant
a) au moins un polymère organique choisi parmi des polyéthers et des esters d'acide polyacrylique, le polymère organique présentant au moins un groupe terminal répondant à la formule générale (I) :
-Aₙ-R-SiXYZ (I)
dans laquelle
A représente une unité de liaison divalente, choisie parmi le groupe comprenant un groupe amide, un groupe carbamate, un groupe urée, un groupe imino, un groupe carboxylate, un groupe carbamoyle, un groupe amidino, un groupe carbonate, un groupe sulfonate et un groupe sulfinate, ainsi qu'un atome d'oxygène et un atome d'azote ;
R représente un résidu d'hydrocarbure divalent contenant de 1 à 12 atomes de carbone dont la chaîne hydrocarbonée principale peut être de manière facultative interrompue par un hétéroatome ; et
X, Y, Z représentent, indépendamment l'un de l'autre, des résidus alkyle en C₁- C₈, alcoxy en C₁-C₈ ou acyloxy en C₁-C₈, au moins un des résidus représentant un groupe alcoxy en C₁-C₈ ou un groupe acyloxy en C₁-C₈ ; et
n est égal à 0 ou 1 ;
b) au moins un poly(dialkylsiloxane) comprenant au moins un groupe terminal répondant à la formule générale (I')
-A'ₙ-R'-SiX'Y'Z' (I'),
dans laquelle
A' représente une unité de liaison divalente, choisie parmi le groupe comprenant un groupe amide, un groupe carbamate, un groupe urée, un groupe imino, un groupe carboxylate, un groupe carbamoyle, un groupe amidino, un groupe carbonate, un groupe sulfonate et un groupe sulfinate, ainsi qu'un atome d'oxygène et un atome d'azote ;
R' représente une liaison directe ou un résidu d'hydrocarbure divalent contenant de 1 à 12 atomes de carbone dont la chaîne hydrocarbonée principale peut être de manière facultative interrompue par un hétéroatome ; et X', Y', Z' représentent, indépendamment l'un de l'autre, des résidus vinyle, des résidus alcoxy en C₁-C₈ ou acyloxy en C₁-C₈, au moins un des résidus représentant un groupe vinyle et au moins un des résidus représentant un groupe alcoxy en C₁-C₈ ou un groupe acyloxy en C₁-C₈ ; et
n' est égal à 0 ou 1 ; et
c) au moins un additif ignifuge choisi parmi le phosphore rouge, des composés de phosphore organique, le polyphosphate d'ammonium, des hydroxydes métalliques, du graphite expansé, du borate de zinc et des sels de mélamine.

2. Composition durcissable selon la revendication 1, **caractérisée en ce que** le polymère organique présente au moins un groupe terminal répondant à la formule générale (I), dans laquelle R représente un résidu méthylène ou un résidu 1,3-propylène.

3. Composition durcissable selon au moins une des revendications précédentes, **caractérisée en ce que** le polymère organique présente au moins un groupe terminal répondant à la formule générale (I), dans laquelle X, Y et Z représentent, chaque fois indépendamment l'un de l'autre, un groupe méthyle, un groupe éthyle, un groupe méthoxy ou un groupe éthoxy, avec cette mesure qu'au moins deux des résidus X, Y et Z représentent un groupe méthoxy ou un groupe éthoxy.

4. Composition durcissable selon au moins une des revendications précédentes, **caractérisée en ce que**, en ce qui concerne le polymère organique, il s'agit d'un polyéther choisi parmi des polyéthylèneglycols, des polypropylèneglycols et des copolymères d'éthylèneglycol-propylèneglycol ou d'un ester alkylique en C₁-C₄ de l'acide polyacrylique.

5. Composition durcissable selon au moins une des revendications précédentes, **caractérisée en ce que**, en ce qui concerne le poly(dialkylsiloxane), il s'agit d'un poly(diméthylsiloxane).

6. Composition durcissable selon au moins une des revendications précédentes, **caractérisée en ce que** le poly(dialkylsiloxane) présente au moins un groupe terminal répondant à la formule générale (I') dans laquelle A' représente un atome d'oxygène et R' représente une liaison directe.

7. Composition durcissable selon au moins une des revendications précédentes, **caractérisée en ce que** le poly(dialkylsiloxane) présente au moins un groupe terminal répondant à la formule générale (I') dans laquelle X' représente un groupe vinyle, et Y' et Z' représentent, indépendamment l'un de l'autre, un groupe méthoxy ou un groupe éthoxy.

8. Composition durcissable selon au moins une des revendications précédentes, **caractérisée en ce que** l'additif ignifuge est choisi parmi l'hydroxyde d'aluminium, l'hydroxyde de magnésium, le graphite expansé et le borate de zinc.

9. Composition durcissable selon la revendication 8, **caractérisée en ce que** l'additif ignifuge est l'hydroxyde d'aluminium.

10. Composition durcissable selon au moins une des revendications précédentes, **caractérisée en ce que** le rapport pondéral de la quantité totale du polymère organique a) à la quantité totale du poly(dialkylsiloxane) b) s'élève de 5 : 1 à 1 : 5, de préférence de 3 : 1 à 1 : 3, de manière particulièrement préférée de 2 : 1 à 1 : 2.

11. Composition durcissable selon au moins une des revendications précédentes, **caractérisée en ce que** la quantité totale de l'additif ignifuge c) s'élève à au moins 10 % en poids, de préférence à au moins 25 % en poids, de manière particulièrement préférée à au moins 50 % en poids, chaque fois rapportés au poids total de la composition durcissable.

12. Utilisation d'une composition durcissable selon au moins une des revendications précédentes à titre d'adhésif, de substance d'étanchéisation ou d'enduction.

13. Utilisation d'une composition durcissable selon au moins une des revendications 1 à 11 pour munir un substrat d'une enduction élastique ignifuge.

14. Enduction, que l'on obtient par application d'une composition durcissable selon au moins une des revendications 1 à 11 sur un substrat à enduire et par durcissement de la composition.

15. Utilisation d'au moins un poly(dialkylsiloxane) comprenant au moins un groupe terminal répondant à la formule générale (I')
-A'ₙ-R'-SiX'Y'Z' (I'),
dans laquelle
A' représente une unité de liaison divalente, choisie parmi le groupe comprenant un groupe amide, un groupe carbamate, un groupe urée, un groupe imino, un groupe carboxylate, un groupe carbamoyle, un groupe amidino, un groupe carbonate, un groupe sulfonate et un groupe sulfinate, ainsi qu'un atome d'oxygène et un atome d'azote ;
R' représente une liaison directe ou un résidu d'hydrocarbure divalent contenant de 1 à 12 atomes de carbone dont la chaîne hydrocarbonée principale peut être de manière facultative interrompue par un hétéroatome ; et X', Y', Z' représentent, indépendamment l'un de l'autre, des résidus vinyle, des résidus alcoxy en C₁-C₈ ou acyloxy en C₁-C₈, au moins un des résidus représentant un groupe vinyle et au moins un des résidus représentant un groupe alcoxy en C₁-C₈ ou un groupe acyloxy en C₁-C₈ ; et
n' est égal à 0 ou 1 ;
pour améliorer le comportement au feu d'une composition durcissable comprenant au moins un polymère organique choisi parmi des polyéthers et des esters d'acide polyacrylique, le polymère organique présentant au moins un groupe terminal répondant à la formule générale (I) :
-Aₙ-R-SiXYZ (I)
dans laquelle
A représente une unité de liaison divalente, choisie parmi le groupe comprenant un groupe amide, un groupe carbamate, un groupe urée, un groupe imino, un groupe carboxylate, un groupe carbamoyle, un groupe amidino, un groupe carbonate, un groupe sulfonate et un groupe sulfinate, ainsi qu'un atome d'oxygène et un atome d'azote ;
R représente un résidu d'hydrocarbure divalent contenant de 1 à 12 atomes de carbone dont la chaîne hydrocarbonée principale peut être de manière facultative interrompue par un hétéroatome ; et
X, Y, Z représentent, indépendamment l'un de l'autre, des résidus alkyle en C₁-C₈, alcoxy en C₁-C₈ ou acyloxy en C₁-C₈, au moins un des résidus représentant un groupe alcoxy en C₁-C₈ ou un groupe acyloxy en C₁-C₈ ; et
n est égal à 0 ou 1.
